# EUROPÄISCHE PATENTANMELDUNG

(11) **EP 4 399 974 A1**
(43) Veröffentlichungstag der Anmeldung: **17.07.2024**
(21) Anmeldenummer: 23151696.4
(22) Anmeldetag: 16.01.2023
(51) Int. Cl.: A21B 5/02

(54) **WAFFELBACKANLAGE**

(71) Anmelder: Walterwerk Kiel GmbH & Co. KG, 24106 Kiel (DE)
(72) Erfinder: Kempaß, Dieter, 24109 Kiel (DE); Krauledat, Helge, 24106 Kiel (DE); Schade, Hannes, 24113 Kiel Hassee (DE); Stoffers, Benjamin, 24536 Neumünster (DE); Cedell, Tord, 23731 Bjärred (SE); Krantz, Fredrik, 24462 Furulund (SE); Jeppson, Peter, 238 41 Oxie (SE)
(74) Vertreter: Patentanwälte Hemmer Lindfeld Frese Partnerschaft mbB

(57) **Zusammenfassung**

Die Erfindung betrifft eine Waffelbackanlage mit einer Vielzahl von Backformen (4), die jeweils von einem Paar mit ihren Formseiten (48) aneinander zugewandten Backplatten (22, 24) gebildet werden, einer Umlaufbahn (2), entlang derer die Backformen (4) im Umlauf bewegbar sind, und einer an einem Backbereich (10) der Umlaufbahn (2) angeordneten mit den Backplatten (22, 24) zusammenwirkenden induktiven Heizeinrichtung, wobei die induktive Heizeinrichtung zumindest eine sich in Richtung ihrer Längsachse (X) parallel zu der Umlaufbahn (2) erstreckende Induktionseinrichtung (12) aufweist, die zumindest eine Induktionseinrichtung (12) mehrere in Richtung der Längsachse (X) der Induktionseinrichtung (12) nebeneinanderliegende Spulen (32) aufweist, und dass die mehreren Spulen (32) in Richtung der Längsachse (X) jeweils eine Ausdehnung haben, die geringer als die Länge einer Backplatte (22, 24) ist.

## Beschreibung

Die Erfindung betrifft eine Waffelbackanlage.

Es sind Waffelbackanlagen bekannt, welche beispielsweise dazu dienen, Eishörnchen im industriellen Maßstab zu fertigen. Derartige Waffelbackanlagen weisen eine Vielzahl von Waffeleisen auf, welche entlang einer Umlaufbahn durch die Anlage bewegt werden. Dabei passieren die Waffeleisen einen Backbereich, in welchem sie beispielsweise mit Hilfe von Gasbrennern von außen erhitzt werden, um den Teig im Inneren zu backen.

Aus US 8,766,148 B2 ist ein induktives Heizsystem für eine Waffelbackanlage bekannt, bei welchem eine Mehrzahl lang gestreckter paralleler Spulen entlang der Umlaufbahn angeordnet ist, sodass sich die Spulen in ihrer Länge über mehrere der Waffeleisen erstrecken.

Es ist Aufgabe der Erfindung, eine verbesserte Waffelbackanlage mit einem induktiven Heizsystem bereitzustellen, welches eine hohe Effizienz und verbesserte Anpassbarkeit der Heizleistung ermöglicht.

Diese Aufgabe wird gelöst durch eine Waffelbackanlage mit den in Anspruch 1 angegebenen Merkmalen. Bevorzugte Ausführungsformen ergeben sich aus den Unteransprüchen, der nachfolgenden Beschreibung sowie den beigefügten Figuren.

Die erfindungsgemäße Waffelbackanlage weist eine Vielzahl von Backformen bzw. Waffeleisen auf. Diese bestehen jeweils aus einem Paar von Backplatten, welche mit ihren Formseiten einander zugewandt sind. Die beiden Backplatten können in bekannter Weise an einer Seite gelenkig miteinander verbunden sein, um zum Befüllen mit Teig und zur Entnahme der gebackenen Waffel oder Waffeln geöffnet zu werden. Die Vielzahl von Backformen ist entlang einer Umlaufbahn durch die Anlage bewegbar. Die Umlaufbahn weist vorzugsweise eine Führungsschiene auf, an welcher die Backformen geführt werden bzw. auf der die Backformen mit Laufrollen laufen. Darüber hinaus sind die Backformen mit einer Förderkette verbunden oder zu einer Förderkette verbunden. Über einen geeigneten Antrieb werden die Backformen entlang der Umlaufbahn bewegt, sodass sie im Umlauf durch die Anlage von einer Befüllstation, in welcher der Teig bei geöffneter Backform auf die untere Backplatte aufgetragen wird, durch einen Backbereich zu einer Entnahmestation, an welcher die gebackenen Waffeln entnommen werden, und wieder zu dem Füllbereich gefördert werden. In dem Backbereich ist an der Umlaufbahn eine induktive Heizeinrichtung angeordnet, welche mit den Backplatten in der Weise zusammenwirkt, dass die induktive Heizeinrichtung die Backplatten erwärmt. Dies erfolgt vorzugsweise in der Weise, dass die induktive Heizeinrichtung ein elektromagnetisches Feld erzeugt, welches auf die Backplatten wirkt, sodass sich diese erwärmen.

Erfindungsgemäß weist die induktive Heizeinrichtung zumindest eine sich in Richtung ihrer Längsachse parallel zu der Umlaufbahn erstreckende Induktionseinrichtung auf. Die Induktionseinrichtung erstreckt sich dabei so, dass die Backformen in Längsrichtung über die Induktionseinrichtung bzw. die Induktionseinrichtung entlang bewegt werden. Die Induktionseinrichtung weist mehrere nebeneinander liegende Spulen auf. Die Spulen sind so angeordnet, dass sie in der Richtung der Längsachse der Induktionseinrichtung nebeneinander liegen, wobei sich vorzugsweise die Hauptachsen der Spulen parallel zueinander und quer zur Längsachse der Induktionseinrichtung erstrecken. Dies bedeutet, dass die Backformen bei der Bewegung entlang der Umlaufbahn in Längsrichtung der Induktionseinrichtung jeweils über die Mehrzahl von Spulen bewegt werden. Die mehreren Spulen haben in Richtung der Längsachse jeweils eine Ausdehnung, welche geringer ist als die Länge einer Backplatte in dieser Richtung, d.h. in der Bewegungsrichtung entlang der Umlaufbahn, welche parallel zur Längsachse der Induktionseinrichtung verläuft. So wird erreicht, dass jede einzelne Spule jeweils nur auf eine Backplatte und nicht auf mehrere Backplatten einwirkt. Dies ermöglicht es, die von den Spulen bereitgestellte Heizleistung besser an die einzelnen Backplatten anpassen zu können. Beispielsweise ist es auch denkbar, die Spulen einzeln oder in Modulen zu steuern bzw. zu regeln. Ferner ist es durch die Vielzahl von kleineren Spulen möglich, diese optimiert relativ zu den Backplatten zu positionieren, sodass die Backplatten in gewünschten Abschnitten beheizt werden, beispielsweise in Abhängigkeit der Gestaltung der Formseite, in welcher die Waffel geformt und gebacken wird.

Bevorzugt haben die Spulen in Richtung der Längsachse der Induktionseinrichtung, d.h. parallel zur Bewegungsrichtung entlang der Umlaufbahn jeweils eine Ausdehnung, die weniger als die Hälfte der Länge einer Backplatte beträgt. So wird erreicht, dass jede Backplatte bei ihrer Bewegung über die Induktionseinrichtung stets mehrere Spulen überdeckt und mehrere Spulen eine einzelne Backplatte über ihre magnetischen Felder erwärmen. Hierdurch wird eine besonders gute Anpassbarkeit der Heizeinrichtung an jeweiliger Heizanforderungen erreicht.

Die Spulen sind vorzugsweise als Flachspulen ausgebildet, welche vorzugsweise in einer Spulenebene gewickelt sind, die sich parallel zu einer Förderebene erstreckt, in welcher die Backplatten in dem Backbereich entlang der Umlaufbahn bewegbar sind bzw. im Betrieb bewegt werden. Die Förderebene erstreckt sich vorzugsweise im Wesentlichen parallel zu den Backplatten. So wird eine flache und kompakte Spulenausgestaltung erreicht. Gleichzeitig kann ein hoher Wirkungsgrad realisiert werden.

Gemäß einer weiteren möglichen Ausgestaltung der Erfindung sind die Spulen jeweils oval oder länglich ausgebildet, wobei sich die Hauptachsen, d.h. die längeren Symmetrieachsen der Spulen jeweils quer zu der Längsachse der Induktionseinrichtung erstrecken. So erstrecken sich die Hauptachsen quer zur Bewegungsrichtung der Backplatten entlang der Umlaufbahn. Durch diese längliche Gestaltung der Spulen wird erreicht, dass die Spulen in Breitenrichtung, d.h. quer zur Bewegungsrichtung, die Backplatten in ausreichender Breite, weiter bevorzugt im Wesentlichen vollständig überdecken können. Gleichzeitig wird aber die Erstreckungsrichtung in der Bewegungsrichtung, d.h. in Richtung der Längsachse der Induktionseinrichtung kürzer gehalten, sodass sich in dieser Richtung die Spulen nicht über die gesamte Länge der Backplatten erstrecken und jeweils stets nur einen Teil einer einzelnen Backplatte überdecken.

Weiter bevorzugt weist jede Spule zumindest zwei sich gerade und parallel zueinander erstreckende Spulenabschnitte auf. Diese geraden Spulenabschnitte bewirken vorzugsweise die längliche Ausgestaltung der Spule und erstrecken sich parallel zu der Hauptachse der Spule, d.h. der längeren Symmetrieachse. Die mehreren Spulen sind weiter bevorzugt so angeordnet, dass sich vorzugsweise alle geraden Spulenabschnitte der mehreren Spulen parallel zueinander erstrecken. So können die mehreren Spulen direkt nebeneinanderliegend angeordnet werden.

Gemäß einer weiteren möglichen Ausgestaltung der Erfindung sind die Spulen jeweils oval oder länglich ausgebildet und die Hauptachsen der Spulen erstrecken sich zu der Längsachse der Induktionseinrichtung jeweils in einem Winkel zwischen 45 Grad und 90 Grad und weiter bevorzugt in einem Winkel zwischen 60 Grad und 80 Grad, besonders bevorzugt in einem Winkel von 70 bis 75 Grad. Durch die schräge Spulenanordnung relativ zur Längsachse des Induktors wird zum einen erreicht, dass die Spulen die Backplatten in Breitenrichtung in ausreichender Breite überdecken. Zum anderen wird die kleinteilige Spulenanordnung in Längsrichtung aufrechterhalten, gemäß derer bei der Bewegung entlang der Umlaufbahn jede Backplatte stets mehrere Spulen überdeckt. Durch die schräge Anordnung wird gleichzeitig aber eine gleichmäßige Erwärmung der Backplatten auch bei der Bewegung über die Spulen sichergestellt.

Bevorzugt sind die Spulen jeweils um einen Kern gewickelt. Ein solcher Kern kann als massiver Metallkern ausgebildet sein. Dabei kann es sich um ein ferromagnetisches bzw. weichmagnetisches Material oder aber auch ein anderes Material oder Metall wie z.B. Aluminium handeln. Vorzugsweise sind die Kerne zumindest zweier benachbarter Spulen an einem gemeinsamen Spulenträger angeordnet oder weiter bevorzugt einstückig mit einem gemeinsamen Spulenträger ausgebildet. Es können auch mehr als zwei Spulen mit ihren Kernen an einem gemeinsamen Spulenträger angeordnet sein. So können Module aus mehreren Spulen gefertigt werden. Die Kerne stellen eine definierte Positionierung der Spulen in der Induktionseinrichtung sicher und können bei geeignetem Material den magnetischen Fluss leiten. Gleichzeitig können Kerne und Träger auch der Kühlung der Spulen dienen, wenn sie aus einem gut wärmeleitfähigen Material, wie beispielsweise Metall gefertigt sind.

Gemäß einer weiteren möglichen Ausgestaltung sind zumindest zwei benachbarte Spulen elektrisch in Reihe geschaltet. Dabei sind die Spulen vorzugsweise derart angeordnet bzw. verschaltet, dass sie dieselbe Stromflussrichtung haben. Besonders bevorzugt sind alle die Spulen, welche auf einem gemeinsamen Spulenträger angeordnet sind, auch elektrisch miteinander verschaltet, vorzugsweise in Reihe geschaltet, wobei sie weiter bevorzugt dieselbe Stromflussrichtung aufweisen. So wird ein Spulenmodul mit mehreren verschalteten Spulen geschaffen. Weiter bevorzugt können mehrere derartige Spulenmodule in der Induktionseinrichtung miteinander kombiniert sein, wobei die mehreren Spulenmodule relativ zueinander so angeordnet sein können, dass sie ebenfalls alle dieselbe Stromflussrichtung haben, oder so, dass die Stromflussrichtung zwischen den Modulen variiert.

Gemäß einer möglichen Ausführungsform sind mindestens zwei, vorzugsweise vier Spulen zu einem Spulenmodul zusammengefasst, in welchen die Spulen elektrisch in Reihe geschaltet sind und auf einem gemeinsamen Spulenträger angeordnet sind. Dazu können, wie vorangehend beschrieben die Kerne, um welche die Spulen gewinkelt sind, auf einem gemeinsamen Spulenträger befestigt sein, oder einstückig mit einem gemeinsamen Spulenträger ausgebildet sein.

Gemäß einer weiteren möglichen Ausgestaltung sind die Spulen an einer Kühleinrichtung angeordnet, wobei weiter bevorzugt ein zumindest eine Spule tragender Spulenträger an der Kühlvorrichtung befestigt ist. Vorzugsweise ist die Kühlvorrichtung als eine Kühlplatte, d.h. ein im Wesentlichen plattenförmiger Kühlkörper ausgebildet. Die Kühlvorrichtung ist mit den Spulen dabei wärmeleitend verbunden, beispielsweise indem die Spulen an einem Kühlkörper, insbesondere einem metallischen Kühlkörper anliegen. Ein solcher Kühlkörper kann von einem Spulenträger gebildet werden, insbesondere einem Spulenträger, wie er vorangehend beschrieben wurde. Der Spulenträger kann beispielsweise als Metallbauteil gefertigt sein, an welchem die Spulen, welche von einer elektrischen Isolierung umhüllt sind, direkt in Anlage kommen. Die Kühlvorrichtung kann luft- oder vorzugsweise flüssigkeitsgekühlt sein. Dabei kann z.B. eine Kühlflüssigkeit direkt an dem Spulenträger entlang strömen. Weiter bevorzugt ist jedoch der Spulenträger in wärmeleitender Anlage mit einer Wandung der Kühlvorrichtung oder mit einem Kühlkörper, durch welche ein Kühlmedium strömt.

Die Spulen sind bevorzugt aus Litzen, insbesondere Kupferlitzen gewickelt. Alternativ könnten die Spulen auch aus massiven Leitern gewickelt sein. Ferner sind die Spulen vorzugsweise so ausgebildet, dass sie nur eine geringe Zahl von Windungen bzw. Wicklungen aufweisen, beispielsweise zwischen zwei und vier Windungen. Die Windungen der Spule sind vorzugsweise mit Kunststoff ummantelt. Bevorzugt sind die Litzen oder Leiter derart ausgebildet, dass sie in ihrem Inneren keine Kühlkanäle aufweisen. D.h. die Kühlung erfolgt vorzugsweise allein von außen.

Gemäß einer besonderen Ausführungsform der Erfindung ist die zumindest eine Induktionseinrichtung derart verstellbar mit einer Tragstruktur der Umlaufbahn verbunden, dass die Position der Induktionseinrichtung relativ zu der Umlaufbahn in einer Richtung quer zur Längsachse der Induktionseinrichtung, d.h. zur Bewegungsrichtung der Umlaufbahn, und parallel zu einer Förderebene der Backform veränderbar ist. Durch diese Verstellmöglichkeit wird somit nicht der Abstand der Spulen zu der Förderebene bzw. den Backplatten verändert, sondern die Position in Querrichtung bezogen auf die Vorschubrichtung. Dies ermöglicht es die Induktionseinrichtung so zu den Backplatten zu positionieren, dass die Wärme in gewünschten Bereichen der Backplatte erzeugt bzw. eingebracht wird. Die Verstellbarkeit kann beispielsweise durch eine Befestigungsschiene realisiert werden, an welcher die Induktionseinrichtung an unterschiedlichen Positionen in Querrichtung bezogen auf die Längsachse befestigt oder positioniert werden kann. Es sind jedoch auch andere geeignete Verstellmöglichkeiten denkbar. Beispielsweise könnten in der Tragstruktur unterschiedliche Befestigungsausnehmungen ausgebildet sein, an welchen die Induktionseinrichtung an verschiedenen Positionen in Querrichtung befestigt werden kann.

Die Umlaufbahn weist vorzugsweise ein Obertrum und ein Untertrum auf. Im Obertrum werden die Backformen in der einen Richtung und im Untertrum in der entgegengesetzten Richtung bewegt, wobei zwischen Obertrum und Untertrum eine Umlenkung erfolgt, in der die Backformen vorzugsweise um 180 Grad gedreht werden, sodass die Unterseite nach oben und die Oberseite nach unten gelangt. Vorzugsweise sind sowohl am Obertrum als auch am Untertrum in einem Backbereich jeweils zumindest eine Induktionseinrichtung angeordnet. Vorzugsweise ist eine Induktionseinrichtung unterhalb des Obertrums und eine Induktionseinrichtung unterhalb des Untertrums angeordnet. D.h. im Obertrum wird vorzugsweise eine erste Backplatte der Backformen erwärmt, während im Untertrum die zweite Backplatte der Backformen erwärmt wird, nachdem die Backform in der Umlenkung gedreht wurde. Es ist jedoch auch denkbar, die Backformen gleichzeitig von oben und von unten zu beheizen, indem Induktionseinrichtungen an gegenüberliegenden Positionen der Umlaufbahn angeordnet werden.

Gemäß einer weiteren möglichen Ausführungsform der Erfindung kann jeweils zumindest eine Backplatte der Backformen eine über Ihre Fläche variierende Dicke und vorzugsweise an einer ihrer Formseite abgewandten Außenseite eine über die Fläche variierende Höhe aufweisen. Auf diese Weise kann der Abstand der Backplatte von der Induktionseinrichtung über die Fläche variieren und/oder es kann an einzelnen Flächenpositionen mehr induktiv erwärmbares Material in der Backplatte vorhanden sein. So kann die Wärmeverteilung in der Backplatte so definiert werden, dass verschiedene Formbereiche an der Formseite in gewünschter Weise erhitzt werden, beispielsweise indem Formbereiche, in denen mehr Teig vorhanden ist, stärker erwärmt werden.

In einer weiteren möglichen Ausgestaltung kann jeweils zumindest eine Backplatte der Backform an einer der Formseite abgewandten Außenseite eine Rippenstruktur mit einer Vielzahl von Rippen aufweisen. Bevorzugt weisen beide Backplatten eine solche Rippenstruktur auf. Die Rippen können dabei in ihrer Breite und/oder Höhe über die Fläche variieren, sodass der Wärmeeintrag über die Rippen gesteuert werden kann. Dort wo die Rippen näher an der Induktionseinrichtung sind oder die Rippen stärker ausgebildet sind, findet beispielsweise eine stärkere Erwärmung statt als in Bereichen, in den die Rippen von der Induktionseinrichtung weiter beabstandet sind oder dünner ausgebildet sind.

Nachfolgend wird die Erfindung beispielhaft anhand der beigefügten Figuren beschrieben. In diesen zeigt:
- Figur 1: schematisch eine Waffelbackanlage,
- Figur 2: schematisch in einer perspektivischen Ansicht die Anordnung zweiter Induktionseinrichtungen an einer Umlaufbahn,
- Figur 3: eine Seitenansicht der Darstellung in Figur 2,
- Figur 4: eine schematische perspektivische Ansicht eines Abschnittes einer Induktionseinrichtung,
- Figur 5: eine schematische Draufsicht auf die Anordnung gemäß Figur 4,

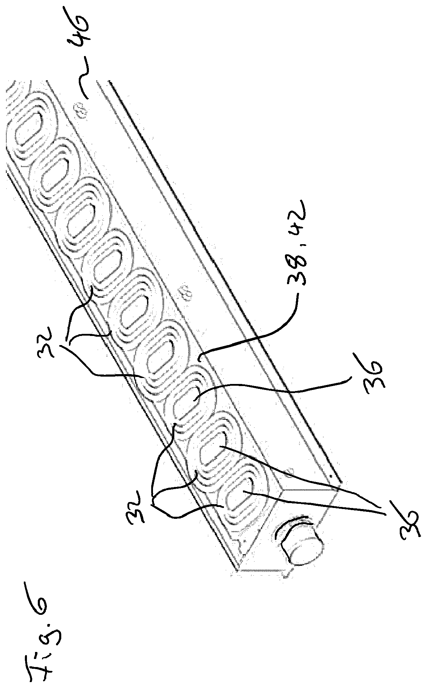

- Figur 6: eine schematische perspektivische Teilansicht einer Induktionseinrichtung,

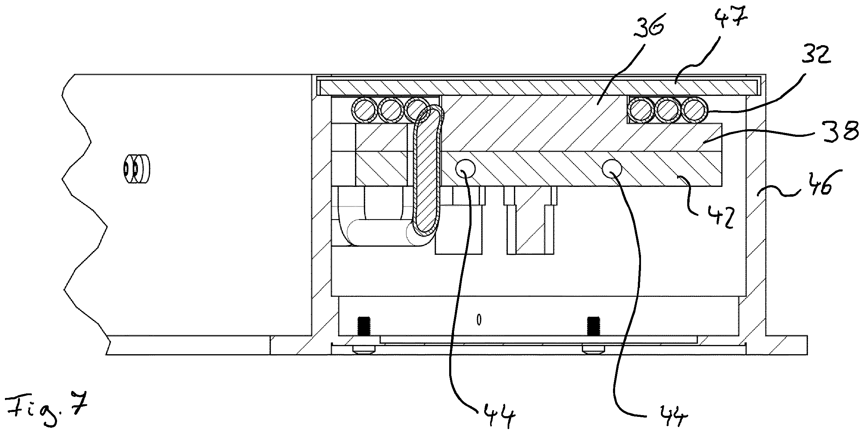

- Figur 7: Schnittansicht der Induktionseinrichtung, und
- Figur 8: schematisch die Ausgestaltung einer Backplatte 22 gemäß einer weiteren möglichen Ausführungsform der Erfindung.

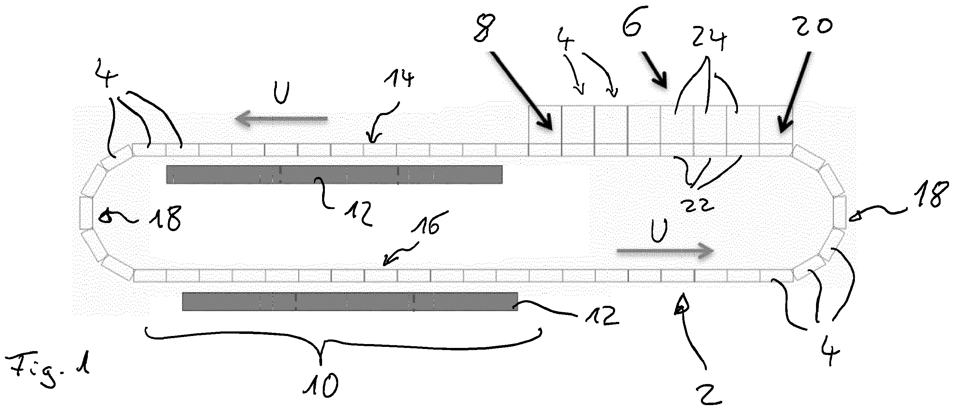

Die erfindungsgemäße Waffelbackanlage ist, wie schematisch in Figur 1 gezeigt, als Umlauf- oder Kreislaufanlage ausgebildet. Die Anlage weist eine Umlaufbahn 2 auf, auf welcher eine Vielzahl von Waffeleisen 4 bzw. Backformen 4 in der Bewegungsrichtung bzw. Umlaufrichtung U im Kreis gefördert werden. Dabei durchlaufen die Backformen 4 verschiedene Stationen bzw. Bereiche. In dem Entnahme- und Füllbereich 6 sind die Backformen 4 zum Befüllen mit Teig und zur Entnahme der gebackenen Waffeln geöffnet. An einer Füllstation 8 wird Teig in die Backformen 4 eingebracht, d.h. auf die untere Backplatten 22 der geöffneten Backformen 4 aufdosiert. Diese werden dann geschlossen und durchlaufen den Backbereich 10. In dem Backbereich 10 sind zwei Induktionseinrichtungen 12 angeordnet, welche die Backformen 4 beheizen. Dabei liegt eine Induktionseinrichtung 12 unterhalb eines Obertrums 14 und eine Induktionseinrichtung 12 unterhalb eines Untertrums 16 der Umlaufbahn 2. In dem Umlenkbereich 18 zwischen Obertrum 14 und Untertrum 16 werden die Backformen 4 um 180 Grad gedreht. So werden die Backformen 4 im Obertrum 14 von einer ersten Seite her und im Untertrum 16 von der entgegengesetzten zweiten Seite her geheizt. Nach dem Durchlaufen des Backbereichs 10 werden die Backformen 4 erneut in einem Umlenkbereich 18 um 180 Grad gedreht und treten wieder in den Entnahme- und Füllbereich 6 ein, in dem die Backformen 4 geöffnet und an einer Entnahmestation 20 die gebackenen Waffeln entnommen werden.

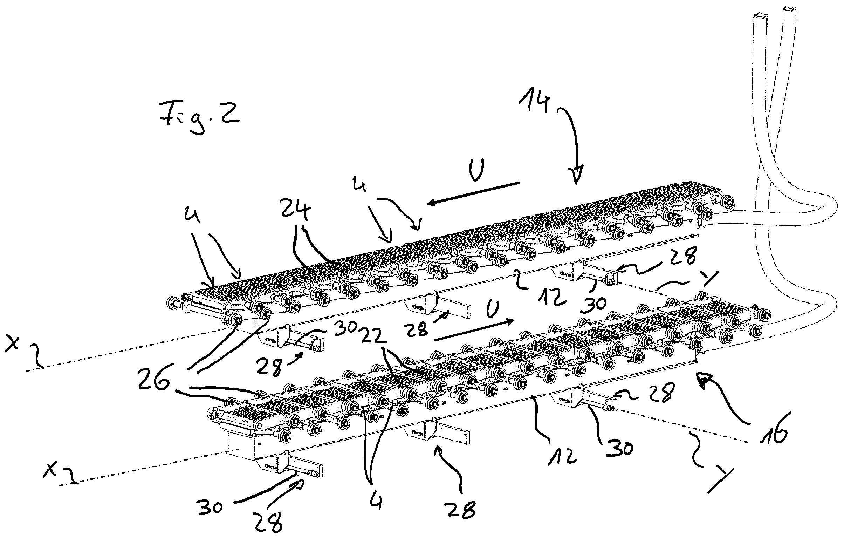

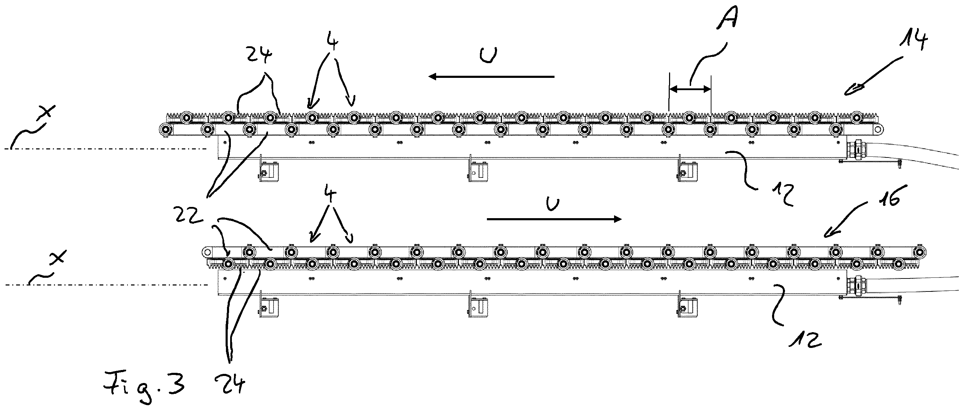

Die Figuren 2 und 3 zeigen schematisch Ausschnitte aus dem Backbereich 10 und jeweils die Anordnung des Obertrums 14 und des Untertrums 16 mit der jeweils darunterliegenden Induktionseinrichtung 12. Die Backformen 4 bestehen in bekannter Weise jeweils aus zwei Backplatten 22, 24, welche mit ihren Formseiten, die die Waffelform definieren, im geschlossenen Zustand aneinander anliegen. In dem beschriebenen Entnahme- und Füllbereich 6 werden die Backplatten 22, 24 geöffnet, sodass das Innere freigegeben wird. Die Backplatten 22, 24 weisen an ihren Seiten Laufrollen 26 auf, mit welchen die Backformen 4 auf nicht gezeigten Führungsschienen der Umlaufbahn 2 abrollen.

Die Induktionseinrichtungen 12 sind unterhalb der Führungsbahnen des Obertrums 14 und des Untertrums 16 so angeordnet, dass sich die Längsachsen X der Induktionseinrichtungen 12 parallel zu der Förder- bzw. Umlaufrichtung U erstrecken. Die Oberflächen bzw. Außenflächen der Backplatten 22, 24 erstrecken sich dabei im Wesentlichen parallel zur Oberfläche der Induktionseinrichtungen 12. Die Oberfläche der Induktionseinrichtungen 12 erstreckt sich im Wesentlichen parallel zu einer Förderebene, welche diejenige Ebene ist, in welcher die Backformen 4 bewegt werden, d.h. im Wesentlichen die durch die Förderrichtung U und die Achsen der Laufrollen 26 aufgespannte Ebene. Die Induktionseinrichtungen 12 sind an Befestigungsaufnahmen 28 einer hier nicht gezeigten Tragstruktur der Umlaufbahn 2 befestigt. Die Befestigungsaufnahmen 28 sind so ausgebildet, dass die Induktionseinrichtungen 12 in einer Querrichtung Y bezogen auf die Längsachse X relativ zu der Umlaufbahn 2 positionierbar sind. Die Befestigungsaufnahmen 28 sind als sich in Querrichtung Y erstreckende Schienen ausgebildet, auf welchen die Induktionseinrichtungen 12 verschoben werden können. Zum Verschieben und Justieren sind Gewindetriebe 30 an den Befestigungsaufnahmen 28 angeordnet.

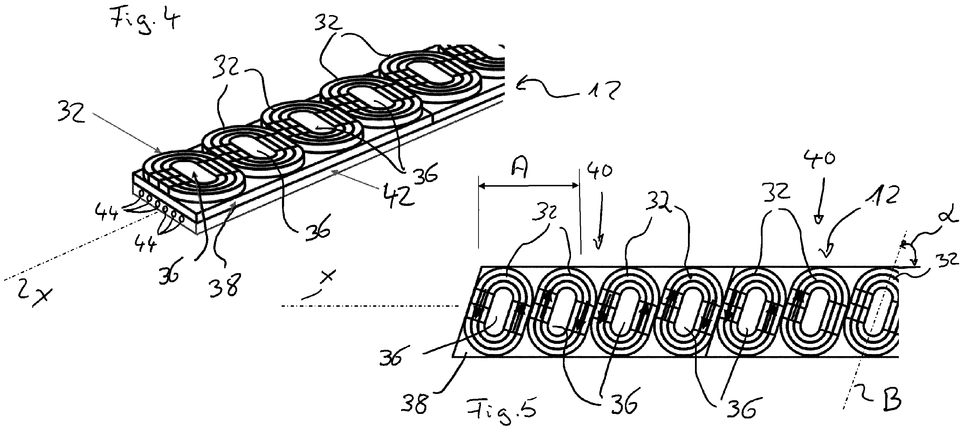

Die Induktionseinrichtungen 12 weisen, wie in den Figuren 4 und 5 gezeigt ist, eine Vielzahl von Spulen 32 auf. Die Spulen 32 sind als in Längsrichtung X nebeneinander liegende Flachspulen 32 ausgebildet. Die Spulen 32 sind jeweils um einen Kern 36 gewickelt. Die Kerne 36 sind an einem Spulenträger 38, welcher als flache Platte ausgebildet ist, angeordnet oder einstückig mit diesem Spulenträger 38 ausgebildet. Dabei sind immer vier Spulen 32 an einem Spulenträger 38 zu einem Spulenmodul 40 zusammengefasst. In den Figuren 4 und 5 ist ein Spulenmodul 40 vollständig und ein zweites Spulenmodul nur teilweise gezeigt. Jede Induktionseinrichtung 12 besteht aus einer Vielzahl von Spulenmodulen 40, beispielsweise sechs oder sieben dieser Spulenmodule. Die Spulen 32 jedes Spulenmoduls 40 sind in Reihe geschaltet und so verschaltet, dass die Stromflussrichtung durch alle vier Spulen 32 des Spulenmoduls 40 gleichgerichtet ist. Die verschiedenen Spulenmodule 40 sind vorzugsweise abwechselnd angeordnet, d.h. um 180 Grad gedreht.

Die Spulenträger 38 dienen gleichzeitig zur Kühlung der Spulen. Dazu sind sie auf einer Montage- oder Kühlplatte 42 befestigt, welche Kanäle 44 aufweist, die von einem Kühlmedium durchströmt werden oder Kühlmittelleitungen aufnehmen. Die Anordnung bestehend aus der Kühlplatte 42, dem Spulenträger 38 und den an diesem befestigten Spulen 32 sind in einem Gehäuse 46 angeordnet, welches unterhalb der Kühlplatte 42 die erforderlichen elektrischen Anschluss- und Verbindungsleitungen für die Spulen 32 aufnimmt. Oberhalb der Spulen 32 ist das Gehäuse 46 durch eine Deckelplatte 47 verschlossen, welche für das von den Spulen 32 erzeugte Magnetfeld durchlässig ist. Die Deckelplatte 47 kann beispielsweise aus Kunstglimmer gefertigt sein.

Die Spulen 32 weisen in Richtung der Längsachse X der Induktionseinrichtung 12 eine Ausdehnung bzw. Breite auf, welche geringer ist als die Länge bzw. Ausdehnung A einer Backplatte 22, 24 in Richtung der Längsachse X. Dadurch wird erreicht, dass jede einzelne Spule 32 stets nur über einer der Backplatten 22 oder 24 gelegen ist und jede Backplatte 22, 24 stets von mehr als einer Spule 32 überdeckt wird. So wird eine gleichmäßige gut einstellbare Erwärmung realisiert. Die Spulen 32 sind länglich bzw. oval ausgebildet, wobei sich die Hauptachsen B der Spulen zur Längsachse X gewinkelt erstrecken, in diesem Beispiel in einem Winkel a von ungefähr 72 Grad. Die Spulen 32 liegen mit ihren Hauptachsen B alle parallel, sodass die langen Spulenteile, d.h. die geraden Spulenteile sich parallel zueinander und direkt aneinander anliegend erstrecken.

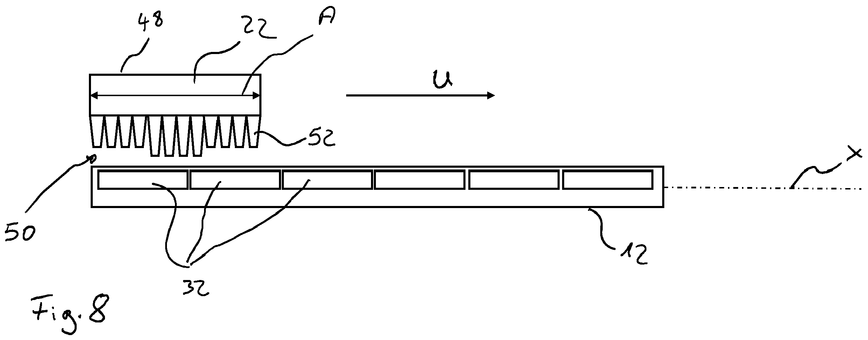

Figur 8 zeigt schematisch eine spezielle Ausgestaltung einer Backplatte 22. Wie auch in den vorangehenden Ausführungsbeispielen gezeigt, weisen die Backplatten 22 auf ihrer der Formseite 48 abgewandten Außenseite 50 Rippen 52 auf, welche beim Durchfahren des Backbereiches 10 der Induktionseinrichtung 12 zugewandt sind. In dem speziellen Ausführungsbeispiel gemäß Figur 8 weisen die Rippen 52 unterschiedliche Höhen auf, wodurch der Abstand der Rippen 52 von der Induktionseinrichtung 12 variiert. Auf diese Weise kann der Wärmeeintrag für einzelne Bereiche der Backplatte 22 unterschiedlich gestaltet werden. In diesem Beispiel wird dort, wo die Rippen 52 höher ausgebildet sind, ein größerer Wärmeintrag erzielt, d.h. in diesem Beispiel im Zentrum der Backplatte 22. In den Bereichen mit den kürzer ausgestalteten Rippen 52 ist der Wärmeeintrag geringer. Auf diese Weise ist es möglich, die Backplatte 22 so zu gestalten, dass ein verstärkter Wärmeeintrag dort geschieht, wo er aufgrund der in der Formseite 48 ausgebildeten Waffelform besonders erforderlich ist. Auch in Figur 8 ist zu erkennen, dass die Spulen 32 in Richtung der Längsachse X kürzer ausgebildet sind als die Länge A der Backplatten 22. Auch wenn in Figur 8 nur eine Backplatte 22 gezeigt ist, so ist zu verstehen, dass die Backplatten 22 Teil einer kompletten Backform 4 sind und eine Vielzahl von Backformen 4, wie in den vorangehenden Beispielen gezeigt, entlang der Umlaufbahn als geschlossene Kette angeordnet ist.

### Bezugszeichenliste

- 2: Umlaufbahn
- 4: Backformen
- 6: Entnahme- und Füllbereich
- 8: Füllstation
- 10: Backbereich
- 12: Induktionseinrichtungen
- 14: Obertrum
- 16: Untertrum
- 18: Umlenkbereich
- 20: Entnahmestation
- 22, 24: Backplatten
- 26: Laufrollen
- 28: Befestigungsaufnahme
- 30: Gewindetriebe
- 32: Spulen
- 36: Kerne
- 38: Spulenträger
- 40: Spulenmodule
- 42: Kühlplatte
- 44: Kanäle
- 46: Gehäuse
- 47: Deckelplatte
- 48: Formseite
- 50: Außenseite
- 52: Rippen
- U: Umlaufrichtung
- X: Längsachse
- Y: Querachse
- B: Hauptachse der Spule
- A: Ausdehnung bzw. Länge der Backplatten
- a: Winkel

## Patentansprüche

1. Waffelbackanlage mit einer Vielzahl von Backformen (4), die jeweils von einem Paar mit ihren Formseiten (48) aneinander zugewandten Backplatten (22, 24) gebildet werden, einer Umlaufbahn (2), entlang derer die Backformen (4) im Umlauf bewegbar sind, und einer an einem Backbereich (10) der Umlaufbahn (2) angeordneten mit den Backplatten (22, 24) zusammenwirkenden induktiven Heizeinrichtung,
**dadurch gekennzeichnet, dass**
die induktive Heizeinrichtung zumindest eine sich in Richtung ihrer Längsachse (X) parallel zu der Umlaufbahn (2) erstreckende Induktionseinrichtung (12) aufweist,
die zumindest eine Induktionseinrichtung (12) mehrere in Richtung der Längsachse (X) der Induktionseinrichtung (12) nebeneinanderliegende Spulen (32) aufweist, und dass
die mehreren Spulen (32) in Richtung der Längsachse (X) jeweils eine Ausdehnung haben, die geringer als die Länge einer Backplatte (22, 24) ist.

2. Waffelbackanlage nach Anspruch 1, **dadurch gekennzeichnet, dass** die Spulen (32) in Richtung der Längsachse (X) der Induktionseinrichtung (12) jeweils eine Ausdehnung haben, die weniger als die Hälfte der Länge einer Backplatte (22, 24) beträgt.

3. Waffelbackanlage nach Anspruch 1 oder 2, **dadurch gekennzeichnet, dass** die Spulen (32) als Flachspulen ausgebildet sind, welche vorzugsweise in einer Spulenebene gewickelt sind, die sich parallel zu einer Förderebene erstreckt, in welcher die Backplatten (22, 24) in dem Backbereich (10) entlang der Umlaufbahn (2) bewegbar sind.

4. Waffelbackanlage nach einem der vorangehenden Ansprüche, **dadurch gekennzeichnet, dass** die Spulen (32) jeweils oval oder länglich ausgebildet sind, wobei sich die Hauptachsen der Spule (32) quer zu der Längsachse (X) der Induktionseinrichtung (12) erstrecken.

5. Waffelbackanlage nach einem der vorangehenden Ansprüche, **dadurch gekennzeichnet, dass** jede Spule (32) zumindest zwei sich gerade und parallel zueinander erstreckende Spulenabschnitte aufweist, wobei sich die geraden Spulenabschnitte der mehreren Spulen (32) vorzugsweise parallel zueinander erstrecken.

6. Waffelbackanlage nach einem der vorangehenden Ansprüche, **dadurch gekennzeichnet, dass** die Spulen (32) jeweils oval oder länglich ausgebildet sind, wobei sich die Hauptachsen der Spulen (32) zu der Längsachse (X) der Induktionseinrichtung (12) jeweils in einem Winkel (a) zwischen 45° und 90°, weiter bevorzugt in einem Winkel (a) zwischen 60° und 80° und besonders bevorzugt in einem Winkel (a) zwischen 70° und 75° erstrecken.

7. Waffelbackanlage nach einem der vorangehenden Ansprüche, **dadurch gekennzeichnet, dass** die Spulen (32) jeweils um einen Kern (36) gewickelt sind, wobei vorzugsweise die Kerne (36) zumindest zweier benachbarter Spulen (32) an einem gemeinsamen Spulenträger (38) angeordnet sind.

8. Waffelbackanlage nach einem der vorangehenden Ansprüche, **dadurch gekennzeichnet, dass** zumindest zwei benachbarte Spulen (32) elektrisch in Reihe geschaltet sind, wobei sie vorzugsweise derart angeordnet sind, dass sie dieselbe Stromflussrichtung haben.

9. Waffelbackanlage nach einem der vorangehenden Ansprüche, **dadurch gekennzeichnet, dass** mindestens zwei, vorzugsweise vier Spulen (32) zu einem Spulenmodul (40) zusammengefasst sind, in welchem die Spulen (32) elektrisch in Reihe geschaltet sind und auf einem gemeinsamen Spulenträger (38) angeordnet sind.

10. Waffelbackanlage nach einem der vorangehenden Ansprüche, **dadurch gekennzeichnet, dass** die Spulen (32) an einer Kühlvorrichtung (42), vorzugsweise in Form einer Kühlplatte, angeordnet sind, wobei vorzugsweise ein zumindest eine Spule (32) tragender Spulenträger (38) an der Kühlvorrichtung (42) befestigt ist.

11. Waffelbackanlage nach einem der vorangehenden Ansprüche, **dadurch gekennzeichnet, dass** die Spulen (32) jeweils aus Kupferlitzen gewickelt sind.

12. Waffelbackanlage nach einem der vorangehenden Ansprüche, bei welcher die zumindest eine Induktionseinrichtung (12) derart verstellbar mit einer Tragstruktur der Umlaufbahn (2) verbunden sind, dass die Position der Induktionseinrichtung (12) relativ zu der Umlaufbahn (2) in einer Richtung quer zu ihrer Längsachse (X) und parallel zu einer Förderebene der Backformen (4) veränderbar ist.

13. Waffelbackanlage nach einem der vorangehenden Ansprüche, **dadurch gekennzeichnet, dass** die Umlaufbahn (2) ein Obertrum (14) und ein Untertrum (16) aufweist, an welchen in einem Backbereich (10) jeweils zumindest eine Induktionseinrichtung (12) angeordnet ist, wobei vorzugsweise eine Induktionseinrichtung (12) unterhalb des Obertrums (14) und eine Induktionseinrichtung (12) unterhalb des Untertrums (16) angeordnet ist.

14. Waffelbackanlage nach einem der vorangehenden Ansprüche, **dadurch gekennzeichnet, dass** jeweils zumindest eine Backplatte (22, 24) der Backformen (4) eine über ihre Fläche variierende Dicke und vorzugsweise an einer ihrer Formseite (48) abgewandten Außenseite (50) eine über die Fläche variierenden Höhe aufweisen.

15. Waffelbackanlage nach einem der vorangehenden Ansprüche, **dadurch gekennzeichnet, dass** jeweils zumindest eine Backplatte (22, 24) der Backformen (4) an einer der Formseite (48) abgewandten Außenseite (50) eine Rippenstruktur aufweist, wobei vorzugsweise die Rippen (52) in ihrer Breite und/oder Höhe variieren.
